# EUROPEAN PATENT APPLICATION

(11) **EP 1 150 099 A1**
(43) Date of publication of application: **31.10.2001**
(21) Application number: 00201528.7
(22) Date of filing: 28.04.2000
(51) Int. Cl.: G01C 21/26

(54) **A vehicle information processing system and method**

(71) Applicant: Mannesmann VDO Aktiengesellschaft, 60388 Frankfurt am Main (DE)
(72) Inventor: Rühl, Hans-Wilhem, 35606 Solms (DE)
(74) Representative: Klein, Thomas, Dipl.-Ing.

(57) **Abstract**

A vehicle navigation system is provided with various interlinked facilities, including a user I/O facility and a position determining facility. In particular, the navigation system is arranged to physically interface to a data communication facility pertaining to a Personal Digital Assistant that comes with a coordinate driven display, a geometrically or coordinate-wise organized input mechanism, and a less-than full alphanumerical keyboard.

## Description

The invention relates to a system as recited in the preamble of claim 1. Vehicle information systems, and in particular vehicle navigation systems have become widespread. The object of such navigation system is generally to facilitate the planning of a user's itinerary on various levels, such as through geographically selecting an optimum route, through the setting of temporal specifications with respect to various destination locations or categorized activities, to the heuristic solving of the "Travelling Salesman" problem, and other. Taken apart from navigational assistance, vehicle information systems may provide and process actual location, technical parameters, repair guidance, and various other categories of information relevant for vehicle use. The present inventor has recognized that the user interface facilities provided on such information systems are often less than optimum as compared to user interface technology presently available, and could in consequence benefit from replacing various elements thereof by facilities that are offered in other devices, such as in particular the portable device that has been dubbed the Personal Digital Assistant or PDA for short.

Present-day navigation systems generally have their own display facility and their own control, either as a fixed facility or in the form of a remote control device. For either of these, I/O facilities are rather limited. On the other hand, present-day Personal Digital Assistant devices will come either with a large fully alphanumerical keyboard and a small display, or alternatively with a small keyboard that is much less than fully alphanumerical and a relatively large display that is operated through a geometrically or coordinate-wise organized input mechanism such as a touch screen or a stylus or another similar activating member. The present inventor has recognized that in particular the latter type of PDA may be used to replace and amplify the remote control facilities of the vehicle navigation system.

The advantages of the newly added device that by itself has been commercialized to an extensive degree, but is now being proposed for use according to the present invention as an advanced peripheral for a vehicle information system are various. They lie first in its essential configuration with respect to its physical user interface facilities, so that the remote control and display properties of the information system proper may become virtually superfluous. Further advantages pertain to the level of organizational improvements, in that the PDA may be used for data exchange between an office or desktop computer on the one hand, and the vehicle navigation/information system on the other. The PDA may optionally be used for theft control purposes with respect to the vehicle, or for data gathering or command processing for vehicle-based applications, such as fleet management.

In particular, an infrared link such as IRDA or RS232 may be used for data communication. The bit-rate necessary therefor may be further limited by transmitting data at a higher signal hierarchy, such as on a character level, on an icon level, or on a vector level. Particular PDA functions are as follows.
- Loading of routes planned earlier, from the PDA into the Navigation System
- Loading personal and other names from the PDA into the Navigation System that therefrom can complete the necessary data for planning the route, whilst combining and arranging the various destinations according to geographical proximity and other criteria
- Reporting actual arrival times, travel times, and the like to the PDA that can use these for updating its internal PDA data, such as those relating to future appointments
- Warning a user person about a next journey to start, in accordance with appointments that have been made on the level of the PDA
- Implementing a theft control facility through the use of user-individual codes and the interaction thereof with the navigation and information policies of the system
- Fleet control, that is the management of vehicle movement as forming part of a many-vehicle set, with respect to distribution logistics and other purposes.

Physically combining a navigation/information system with a PDA will provide for a more efficient intercoupling between the various components of the hybridized organization, and therefore raise productivity, as well as allow new and improved results over those of the prior art.

In consequence, amongst other things, it is an object of the present invention to physically integrate the functionality of a vehicle navigation system and various functionalities pertaining to the field of office automation, and in particular, the functional features of a PDA.

Now therefore, according to one of its aspects the invention is characterized according to the characterizing part of claim 1.

The invention also relates to a method for operating a system according to claim 1. Further advantageous aspects of the invention are recited in dependent claims.

These and further aspects and advantages of the invention will be discussed more in detail hereinafter with reference to the disclosure of preferred embodiments, and in particular with reference to the appended Figures that show:
Figure 1, an overall diagram of a comprehensive vehicle navigation system;
Figure 2, a perspective view of a PDA operated through a geometrically organized input mechanism;
Figure 3, a block diagram of the combination according to the invention;
Figure 4, a diagram of an information transfer embodiment according to the invention.

The principle of the invention is to combine the functionalities of a vehicle information system on the one hand, and a PDA on the other hand. The latter may communicate on an interface that connects the information system with the PDA. For example, the PDA is provided to load data into the navigation system, and to therefrom receive data for use on the PDA level.

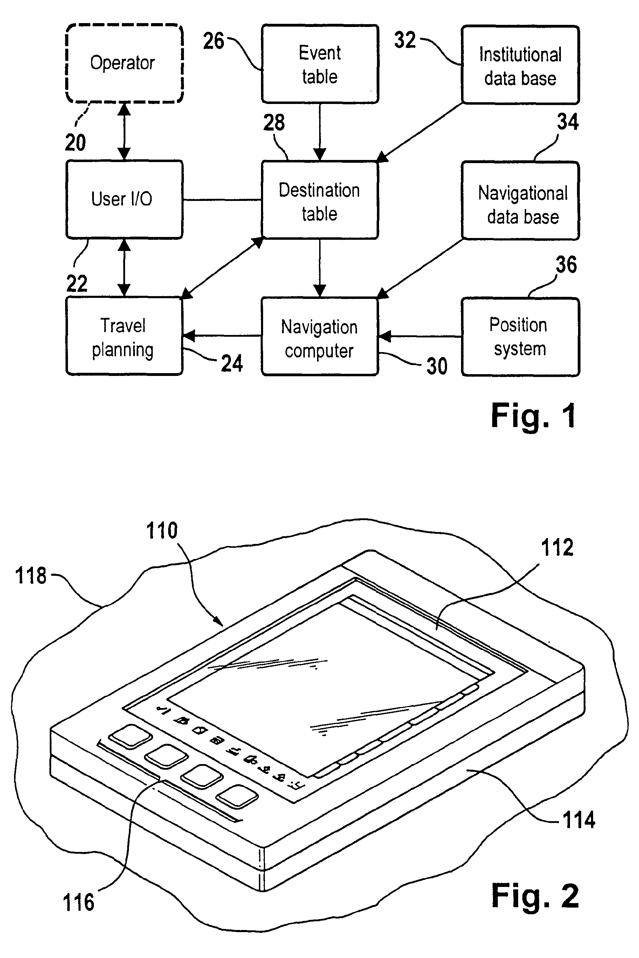

Figure 1 shows an overall diagram of a prior art Vehicle navigation system, that by way of example has nine subsystems, as follows. Block 20 symbolizes a user person who wants to be guided by the system. The user will bidirectionally interface to the system's I/O that may have various hardware and software facilities such as keyboard, mouse, speech, other audio, and display. Block 32 represents an institutional data base that may store various entries, such as representing hotels, restaurants or other facilities, together with associated data such as location, business hours, and actual services present at those facilities. Block 34 represents a navigational data base that may store data of a road network, together with physical distances or travel time distances between representative points, road classifications, and others. Block 36 represents a position system that detects an actual position of the vehicle, such as through using a well known GPS system. Block 26 represents an event table, such as listing a roadblock or jam situation that has been communicated by a higher level authority such as as a **R**adio **D**ata **S**ystem, and which event may cause certain destinations to be no longer reacheable, or only in a delayed manner, or which may necessitate the vehicle to take a detour.

Block 28 represents a destination table that contains the destinations and associated timing indications, such as entered by the user through block 22, and subject to information from the travel planning in block 24, the institutional data base in block 32, and the event table in block 26. Block 30 represents a navigational computer that is fed with the destination table from block 28, with the navigational data base from block 34, and with the position from block 36. From these informations it can figure out a route to be taken, which route may contain various interval points and furthermore, timing indications associated to the various interval points. Block 24 represents the travel planning that is fed by the information from the navigational computer 30, and which block 24 furthermore bidirectionally interfaces to the destination table in Block 28, and to the user I/O in Block 22. The travel planning will update the destination table if it fails to find a correct solution for attaining all interval points, and it will signal the user what route is to be taken, as well as will signal the above failure to allow the user to modify the set of interval points and/or associated timing indications. Now, while the system depicted in Figure 1 is fairly comprehensive, a person skilled in the art will recognize that often not all diagram blocks will be necessary in the embodiment of the present invention. Alternatively, other functional blocks could be added.

Figure 2 illustrates a perspective view of a PDA 10 operated through a geometrically or coordinate-wise organized input mechanism. It includes a display screen 12 supported in a housing 14 for displaying various items provided from a memory not shown here. Various keys are included on the housing for commanding the mode of operation of the PDA 10. Such keys would control the showing of a document or map, of a set of command icons, or various other items that by way of principle would be known from the art of personal digital assistant devices. The user may scroll a document of which the actually displayed field may be just a cut-out. The PDA may come with a mouse, a joy-stick, a stylus actuated input, or another geometrically organized input mechanism. The mouse would interact with with a work surface 18 to scroll the displayed field on the PDA, to select map or menu items, to actuate or move icons displayed and execute various functions of mouse technology. Similar properties apply to a joystick or to a stylus such as for actuating an on-screen control icon.

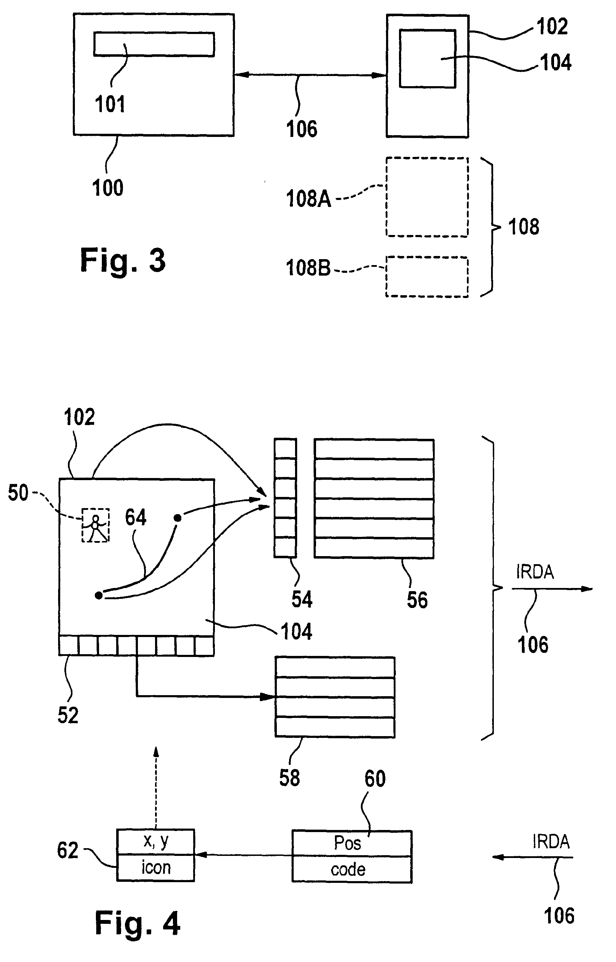

Figure 3 illustrates a block diagram of the combination according to the invention. Block 100 represents the vehicle navigation system provided with a storage module 101 generally based on CD-ROM or the like. Item 106 is a wireless interconnection with Personal Digital Assistant device 102 that is provided with relatively large screen 104 that may without restriction have a size of 8x10 centimeters. Items 108 symbolizes various functional levels of the PDA, such as vector graphics to pixel conversion 108A and icon display 108B functionalities. The vehicle information system may provide for positioning, dead reckoning, route calculation, guidance, event generation under control of an input device, and provide as outputs menu screens, icon-based guidance, and maps, that will be communicated to PDA 102 for display.

The output on interconnection 106 may be on the character level, such as by an ASCII or other character code. The output may also be on an icon level, wherein an icon is represented as an icon code that the vehicle information system will be able to recognize and to interprete by table access. The output may also be on a vector graphics level, wherein a vector or similar image part may be represented by the coordinates of its two endpoints and possibly a directional bit, or in more complicated cases by an approximating set of Bezier code coordinates. Inside the vehicle information system, these inputs will straightforwardly be converted to an internal format for the purposes of reckoning and guidance, or for producing internal screen coordinates in the Information system's internal representation.

Figure 4 shows a diagram of an information transfer embodiment, wherein earlier numerals have been reused for corresponding items. Display field 104 of PDA 102 shows icon 50 and curve 64. These address addressing mechanism 54 of code storage 56, so that the displayed items may have their information transferred in the form of an icon code or the endpoint locations of the curve. For a straight line, this will be sufficient. For a curve, a few more parameters may be necessary, such as the Bezier parameters. Also drawing categories such as colour, dotted, heavy, etcetera may be transmitted. Item 52 indicates a set of hardwared control keys that have their code stored in item 58 for likewise transfer over IRDA to the information system. Conversely, the information system through IRDA 106 may provide a combined information item 60 comprising a position information and a code to activate storage in item 56. Conversion into icon shape and curve character is through encoder 62. In similar manner the opposite direction of IRDA 106 may have a decoder. Also, transfer of ASCII or similarly coded characters may lower transfer capability requirements combined with the display of complex character shapes on display 102.

## Claims

1. A data processing system for operating a vehicle information system provided with various interlinked facilities, including a user I/O facility and a position determining facility, being **characterised by** comprising a Personal Digital Assistant Device that comes with a coordinate driven display, a geometrically coordinate-wise organized input mechanism, and a less-than full alphanumerical keyboard as an Input/Output Device for the vehicle information system, being connected therewith through a remote interconnection.

2. A system as claimed in Claim 1, **characterised in that** wherein said Personal Digital Assistant is arranged to communicate with the vehicle information system on one or more of a character level, an icon level, or a vector level.

3. A system as claimed in Claim 1, **characterised by** said remote interconnection being arranged according to an IRDA or RS 232 convention.

4. A system as claimed in Claim 1, **characterised by** said Personal Digital Assistant being arranged to exchange data with an office or desktop computer.

5. A system as claimed in Claim 1, **characterised by** said Personal Digital Assistant being arranged for implementing an anti-theft measure.

6. A system as claimed in Claim 1, **characterised by** said Personal Digital Assistant being arranged for implementing a higher level information management measure, such as fleet control.

7. A method for operating a vehicle information system provided with various interlinked facilities, including a user I/O facility and a position determining facility being **characterised by** interfacing to the vehicle information system a Personal Digital Assistant Device that comes with a coordinate driven display, a geometrically coordinate-wise organized input mechanism, and a less-than full alphanumerical keyboard as an input/output device, by interconnecting it therewith through a remote interconnection.

8. A method as claimed in Claim 7, **characterised by** arranging said Personal Digital Assistant to communicate with the vehicle information system on one or more of a character level, an icon level, or a vector level.

9. A method as claimed in Claim 7, **characterised by** arranging said remote interconnection according to an IRDA or RS 232 convention.

10. A method as claimed in Claim 7, **characterised by** arranging said Personal Digital Assistant to exchange data with an office or desktop computer, to implement an anti-theft measure or to implement a higher level information management measure, such as fleet control.
